# EUROPÄISCHE PATENTSCHRIFT

(11) **EP 1 380 084 B1**
(45) Veröffentlichungstag und Bekanntmachung des Hinweises auf die Patenterteilung: **27.08.2008**
(21) Anmeldenummer: 02735281.4
(22) Anmeldetag: 22.04.2002
(51) Int. Cl.: H02B 13/00

(54) **SAMMELSCHIENENVERBINDUNG**
BUSBAR CONNECTION
LIAISON A BARRE COLLECTRICE

(30) Priorität: 20.04.2001 DE 10119335; 09.08.2001 DE 10139251
(43) Veröffentlichungstag der Anmeldung: 14.01.2004
(73) Patentinhaber: Ormazabal Anlagentechnik GmbH, 47804 Krefeld (DE)
(72) Erfinder: DIRKS, Rolf, 47877 Willich (DE); SCHAAK, Martin, 59065 Hamm (DE)
(74) Vertreter: Cohausz & Florack
(86) Internationale Anmeldenummer: PCT/EP2002/004399
(87) Internationale Veröffentlichungsnummer: WO 2002/087043

(56) Entgegenhaltungen:
- EP-A- 0 570 688
- FR-A- 2 736 461

## Beschreibung

Die Erfindung betrifft eine Sammelschienenverbindung von einer Schaltanlage, insbesondere einer gasisolierten Mittelspannungsschaltanlage, zu einem luftisolierten Messfeld nach dem Oberbegriff des Hauptanspruchs.

Hierbei ist eine Öffnung für jede Phase in einer Wand der Schaltanlage für eine Verbindung zum Messfeld vorhanden. Messfeldwand und Schaltfeldwand stehen nebeneinander und sind miteinander verschraubbar. In der Schaltfeldwand sitzt ein topfförmiger Isolierkörper, der mit seiner offenen Seite gegen die Innenfläche der Schaltfeldwand gerichtet ist und in der Topfform des Isolierkörpers befindet sich ein elektrisches Kontaktstück, welches eine Aufnahmemöglichkeit für einen Anschlusskontakt zur elektrischen Verbindung zum Messfeld hat. Bisher hat sich als elektrische Verbindung schon der Einsatz von Kupferrundleitern mit äußerer Schrumpfschlauch-Isolierung bewährt. Eine Sammelschienenverbindung von einer Schaltanlage der eingangs genannten Art ist aus der EP 0 570 688 A2 bekannt.

Bei einem Schaltanlagensystem mit Sammelschienenkupplungen ist in der WO 9740563 A1 ein Übergang von der Durchführung im Gastank eines ersten Schaltfeldes auf eine benachbarte Schaltfeldwand beschrieben. Bei dieser Sammelschienenkupplung sind die Isolierkörper auf massiven Metalleinlagen unlösbar aufgebracht. Weiterhin sind die Metalleinlagen in den Öffnungen der Schaltfeldwände eingeschweißt. Das Trennen der Schaltfelder und das Verschließen der Öffnungen für eine anderweitige Verwendung eines Schaltfeldes ist nur möglich, wenn die aufwendig angeschweißten Metalleinlagen abgetrennt werden.

Problematisch an einer solchen Sammelschienenkupplung ist weiterhin die Feldsteurung in der Nähe der Ränder der Öffnungen in den Schaltfeldwänden. Insbesondere können die Schaltfelder nicht beliebig nahe aneinander gerückt werden, bzw. Die Öffnungen in den Schaltfeldwänden nicht besonders klein gestaltet werden. Wenn die auf Erdpotential liegenden Ränder der Öffnungen an die elektrische Verbindung heranrücken, erhöht sich die elektrische Feldstärke in diesem Bereich und kann kritische Werte erreichen. Zur Vermeidung dieser Probleme ist die vorgenannte Sammelschienenkupplung in sehr langen Baumaßen ausgeführt, wodurch viel Raum in beiden Schaltfeldern eingenommen wird.

Es ist Aufgabe der Erfindung, eine Verbesserung der Durchführung zu einem Meßfeldanschluß anzugeben, wobei besonders eine klein bauende Anordnung angestrebt wird.

Die Lösung wird in den Merkmalen des Hauptanspruchs angegeben. Weiterführende Ausgestaltungen sind in den Unteransprüchen formutiert.

Die Erfindung besteht im Kem aus einer Reihe von Merkmalen für jede Phase der Sammelschienenverbindung:
Im Isolierkörper, der aus Gießharz hergestellt sein kann, sind Mittel zur Befestigung mit der Schaltfeldwand integriert. Diese Mittel sind vorzugsweise als Schraubhülsen ausgebildet, in die die Verschraubungen zur Schaltfeldwand greifen.
Innerhalb der Topfform des Isolierkörpers ist eine Dichtspalte zur Aufnahme eines schaltfeldseitigen Randes eines becherförmigen Dichtkörpers aus Isoliermaterial - vorzugsweise aus Silikonkautschuk - vorhanden.
Der Rand des Dichtkörpers ist in die Dichtspalte einlegbar, dies soll mechanisch möglich unter Preßandruck erfolgen.
Der Dichtkörper trägt eine den Anschlußkontakt berührende Leitbeschichtung.
Der Anschlußkontakt ist zur Aufnahme eines Leiters, vorzugsweise ist ein isolierter Cu-Rundleiter vorgesehen, zur elektrischen Verbindung zum Meßfeld ausgebildet.

Der Dichtkörper umhüllt das Kontaktstück, den Anschlußkontakt und den Rundleiter (teilweise oder ganz) in geometrischer Form eines Feldsteuerkörpers. Eine äußere Leitbeschichtung, die zur Feldsteuerung beiträgt, ist von der Kontaktfläche mit der Meßfeldwand bis etwa 2/3 der meßfeldseitigen Länge des Dichtkörpers vorhanden, sowie eine innere Leitbeschichtung von der Aufnahme im Isolierkörper (Dichtspalt) bis zum Kontakt mit dem Anschlußkontakt.

Ein Befestigungsflansch umgreift den Dichtkörper zentrisch und der Dichtkörper ist über am Befestigungsflansch angreifende Schrauben an der Meßfeldwand fixierbar. Mit der Verschraubung von Meßfeld und Schaltfeld, wobei der Abstand der Wände über einen Abstandshalter oder ein Distanzstück eingestellt ist, wird der Dichtkörper mit der schaltfeldseitigen becherförmigen Ausbildung in den Isolierkörper gepresst und der Anschlußkontakt mit dem Kontaktstück in leitende Verbindung gebracht. Eine äußere, insbesondere dem Berührungsschutz dienende Abdeckung der Sammelschienenkupplung ist durch das Gehäuse des Meßfeldes gegeben.

Für jede Phase ist eine derartige Sammelschienenverbindung vorhanden. Die Sammelschienenverbindungen liegen räumlich nahe benachbart. Form und Größe des Befestigungsflansches-sind so beschaffen, dass ein guter Kontakt zum Erdpotential der Schaltfeldwand erzielt wird und Kurzschlußfestigkeit zwischen den Phasen sichergestellt ist.

Vorteilhafte Weiterführungen bestehen noch aus folgenden Einzelheiten. Diese können einzeln oder in Kombination miteinander eingesetzt werden.

Der Dichtkörper ist meßfeldseitig geometrisch derart geformt, dass die Form zusammen mit der äußeren Leitbeschichtung ein Feldsteuerprofil bildet, vergleichbar einem Borda-Profil.

Das Feldsteuerprofil ist so ausgebildet, dass die meßfeldseitige Länge des Dichtkörpers drei Längenabschnitte etwa gleicher Länge hat. Der erste Längenabschnitt - von der Befestigungsschufter aus betrachtet - verläuft zylindrisch mit seinem eine ausreichende Steifigkeit erzeugenden Durchmesser. Auf dem zweiten Längenabschnitt ist das Feldsteuerprofil (Steuerungsnut) derart ausgebildet, dass eine konische Verjüngung vorhanden, die nach einem Radius in eine trompetenförmige Öffnung (Hohlkehle) übergeht und tangential an einer gerundeten Kante senkrecht zur Achse des Dichtkörpers endet. An der Rundung schließt sich ein kurzer zylinderischer Teilabschnitt des dritten Längenabschnitts mit demselben Durchmesser wie im ersten Längenabschnitt an und geht danach in einen Konus über, der sich auf den Durchmesser des Leiters verjüngt, wobei die äußere Leitbeschichtung von der Befestigungsschulter bis hin zur Kante am zylindrischen Teilabschnitt vorhanden ist.

Die äußere Leitbeschichtung bedeckt den Dichtkörper vom größten Durchmesser der Kante an der Steuerungsnut bis zur Fläche an der Befestigungsschulter, die mit der Schaltfeldwand in Kontakt tritt. Die Länge des konischen Abschnittes auf dem dritten Längenabschnitt ist so gewählt, dass dort die Isolierfeldstärke voll erreicht ist, so dass Überschläge zum Leiter ausgeschlossen sind.

Das Kontaktstück ist für die Aufnahme des Dichtkörpers halbkugelig und der Dichtkörper komplementär mit einem kugelförmigen Hohlraum ausgebildet.

Der Anschlußkontakt hat eine Bohrung zur Aufnahme des Leiters und der Anschlußkontakt ist über mindestens eine Kontaktschraube (vorzugsweise Madenschrauben) mit dem Leiter verbindbar.

Der Leiter ist als Rundleiter ausgebildet und von einem Schrumpfschlauch umhüllt. Dabei ist im Anschlußkontakt zur Aufnahme des Schrumpfschlauchs eine Ausnehmung ausgebildet.

Die Leitbeschichtungen bestehen aus Leitlack, der als Silikonspray aufgetragen und mitvulkanisiert werden.

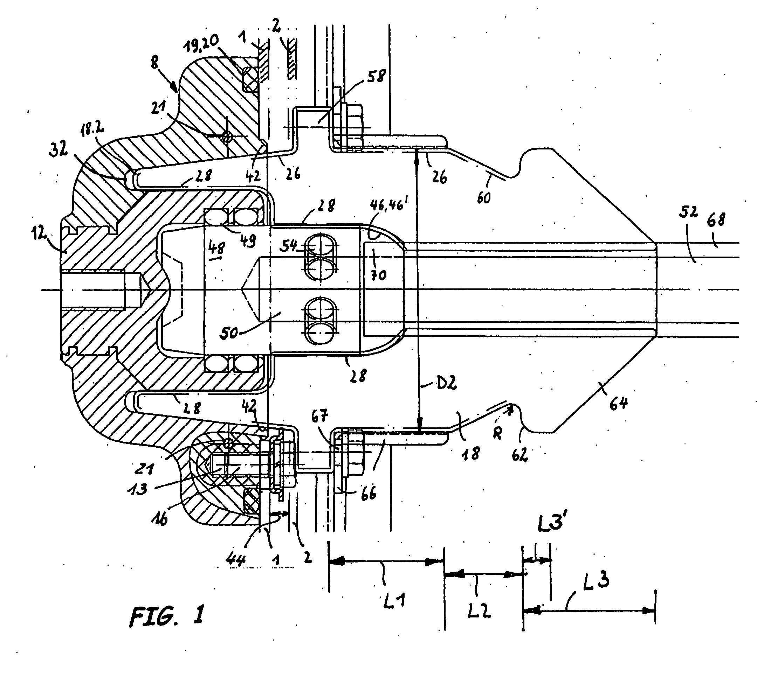

Ein Ausführungsbeispiel ist in der einzigen Figur gezeigt.

Die CAD-Zeichnung zeigt im Einzelnen einen Schnitt durch die Sammelschienenkupplung einer Phase zwischen der Wand 1 eines Schaltfeldes einer Schaltanlage für Mittelspannung und der Wand 2 eine luftisolierten Meßfeldes.

Der Isolierkörper 8 ist topfförmig, rotationssymmetrisch ausgebildet und in ihm sind mindestens zwei Befestigungsmittel 13 integriert, die als metallische Hülsen mit Innengewinde (Eingießgewinde) ausgebildet sind. In die Innengewinde werden Schrauben 16 eingeschraubt, die den Isolierkörper an der Schaltfeldwand 1 befestigen. Der lsolierkörper 8 ist aus Gießharz hergestellt, wobei der lsolierkörper direkt um das Kontaktstück 12 herum vergossen wird und mit ihm einen einstückigen Körper bildet.

Im Isolierkörper 8 ist eine Nut 19 für eine O-Ring-Dichtung 20 gegen die Schaltfeldwand 1 eingeformt, sowie eine Wulst 42, die zur Zentrierung in die Öffnung der Schaltfeldwand 1 dient. Eine Elektrode 21 zur Feldsteuerung am Rand der Wandöffnung ist als geschlossener Ring (vorzugsweise als Stahldraht) ausgebildet, der mit den Hülsen 13 in Berührung steht. Der Ring 21 wird bei der Herstellung des lsolierkörpers 8 in an den Hülsen vorhandenen Nuten eingeclipst, wodurch eine gegenseitige Fixierung und Stabilisierung stattfindet (zumindest für die Zeit des Abbindens des Gießharzes). Der Ring 21 kontaktiert über die Hülsen 13 und die Befestigungsschrauben 16 mit dem Erdpotential der Schaltfeldwand 1.

Die elektrische Verbindung zum Schaltfeld wird über das Kontaktstück 12 und den metallischen Anschlußkontakt 48 vermittelt. Zur Verbesserung des Kontakts können federnde Ringe 49 eingesetzt werden. Der nichtleitende Dichtkörper 18 ist als Feldsteuerkörper ausgebildet und umschließt den Anschlußkontakt 48 und den Leiter 52 in noch näher erläuterter Weise.

Das Anschluß-Kontaktstück 48 ist für die Aufnahme des Dichtkörpers 18 halbkugelig 46 und der Dichtkörper 18 komplementär mit einem kugelförmigen Hohlraum 46' ausgebildet. Im Anschlußkontakt 48 ist eine Bohrung 50 zur Aufnahme des Rund-Leiters 52 ausgebildet. Der Anschlußkontakt 48 wird über mindestens eine Kontaktschraube 54 mit dem Leiter 52 verbunden.

Der Dichtkörper 18 ist ebenfalls rotationssymmetrisch ausgebildet und vorzugsweise aus Silikonkautschuk hergestellt. In der Figur ist der Dichtkörper in entspannter Konfiguration gezeichnet, so dass sich seine Konturlinien mit den Konturlinien des Anschlußkontakts 48 und des Schrumpfschlauchs 68 auf dem Leiter 52 überlappen. In der Darstellung wird somit auch die Dehnung erkennbar, die der Silikonkautschuk-Körper 18 beim Einbau erfährt. Der Dichtkörper 18 hat eine Leitbeschichtung, vorzugsweise aus Leitlack mit einer Dicke von 0,1 mm. Der Leitlack ist als Silikonspray aus halbleitendem Material aufgetragen und zusammen mit dem Dichtkörper vulkanisiert. Die Leitbeschichtung ist innen (28) und außen (26) vorhanden. Die innere Leitbeschichtung erstreckt sich bis zum schaltfeldseitigen Rand 18.2 des Dichtkörpers und umläuft den Rand noch ein kleines Stück (wie die Figur ausweist). Der Rand 18.2 liegt in der Dichtspalte 32 des Isolierkörpers 8 eng eingepreßt.

An die äußere umlaufende breite Befestigungsschulter 58 wird beim Zusammenbau der Befestigungsflansch 66 wie eine Manschette herumgelegt. Die Meßfeld-Wand 2 ist im Durchmesser der Befestigungsschulter durchbrochen, so dass der Isolierkörper sich durch Anziehen mindestens einer der Schrauben 67 beim Verschrauben von Meßfeld und Schaltfeld der Schaltfeldwand 1 bis auf ein eingelegtes Distanz- oder Fixierstück mit etwa 5 mm Abstand nähern kann. Durch die Wahl der Abmessungen ist sicher gestellt, dass der Dichtkörper in die Dichtspalte 32 des Isolierkörpers 8 fest einpressbar ist. Die Befestigungsschulter 58 ist mit der äußeren Leitbeschichtung 26 belegt. Dabei wird das Erdpotential der Meßfeldwand 2 und über die metallische Verschraubung beider Wände 1,2 auch die Schaltfeldwand kontaktiert.

Als Mittel zur Verschraubung von Meßfeld und Schaltfeld werden dem Fachmann bekannte Schraubelemente eingesetzt, wobei vorzugsweise die Verschraubung so vornehmbar ist, daß die Wände sich verkantungsfrei parallel zueinander anordnen lassen. Entscheidend ist noch, daß alle drei Sammelschienenverbindungen der drei Phasen gemeinsam sicher ineinander greifen und kontaktieren. Daher sind die Teile der Sammelschienenverbindung steckbar gestaltet. Damit wird erreicht, daß die elektrische Verbindung trennbar ist und die Öffnung zum Schaltfeld mit einem passenden lsolierkörper sicher verschließbar ist, wenn eine Meßverbindung nicht benötigt wird.

Die zum Meßfeld gewandte Länge des Dichtkörpers 18 zusammen mit der Leitbeschichtung 26 dient der Feldsteuerung des elektrischen Potentials zwischen Rundleiter 52 und Gehäusewandung 2. An der zur Befestigung ausgebildeten Schulter 58, wo der Dichtkörper seinen ersten, größten Durchmesser hat, schließen sich drei etwa gleich lange Abschnitte an: ein zylindrischer Längenabschnitt (L1) mit einem zugehörigen, zweiten Durchmesser D2, ein Steuerprofil (L2) und ein konischer Abschnitt (L3). Der Abschnitt L1 wird vom Befestigungsflansch 66 umgriffen. Dieser Abschnitt L1 ist in zwänge und Durchmesser so ausgebildet, dass der Dichtkörper gegen Verbiegen unter Kurzschtußstromkräften zwischen den Phasen stabilisiert ist.

Der Steuerprofil-Abschnitt L2 verläuft verengend konisch zu und bildet eine trompetenförmig ausgebildete Hohlkehle (Steuerprofil 60). Die Tiefe des Steuerprofils 60 wird durch einen Radius R gebildet. Vom diesem Radius verläuft das Steuerprofil trompetenförmig tangential nach außen bis zum dritten Durchmesser, der dem zweiten Durchmesser des zylindrischen Abschnitts L1 entspricht. Am dritten Durchmesser ist ein gerundeter Übergang 62 ausgebildet. Die Oberfläche der Befestigungsschulter 58 und die Abschnitte L1 und L2 tragen die Leitbeschichtung 26, sie endet an einer Stelle hinreichend kleiner Feldstärke, hier in der Tiefe der Hohlkehle.

Auf dem kurzen Längenteilabschnitt L3' ist der Dichtkörper mit dem dritten Durchmesser zylindrisch ausgebildet und verjüngt sich (Konus) zu seinem meßfeldseitigen Ende auf den Durchmesser des Rundleiters 52. Die Ausbildung des meßfeldseitigen Endes ist darauf abgestimmt, dass in diesem Bereich das Potential soweit reduziert ist, dass die in Luft zulässige Feldstärke (Begrenzung der Durchschlagsfestigkeit) nicht unterschritten wird.

Mit der Ausbildung des Feldsteuerprofils 60 gelingt es, eine Potentialsteuerung vorzunehmen, die ohne gesondert ausgebildete und zusätzlich einzufügende Feldsteuerkörper auskommt, wie sie sonst bei dem Abschluß von Kabelenden in einer Muffe bei ähnlichen Spannungen vorgesehen werden.

## Patentansprüche

1. Sammelschienenverbindung von einer Schaltanlage zu einem luftisolierten Messfeld, insbesondere bei ener gasisolierten Mittelspannungsschaltanlage,
mit einer Öffnung für jede Phase in einer Wand (1) der Schaltanlage für eine Verbindung zum Messfeld, wo eine Messfeldwand (2) und eine Schaltfeldwand (1) nebeneinander stehen und miteinander verbunden sind,
mit einem topfförmigen Isolierkörper (8), der mit seiner offenen Seite gegen die Innenfläche der Schaltfeldwand (1) gerichtet ist,
mit einem innerhalb der Topfform des Isolierkörpers (8) befindlichen, elektrischen Kontaktstück (12) und mit einer Aufnahmemöglichkeit im Kontaktstück (12) für einen Anschlusskontakt (48) zur elektrischen Verbindung zum Messfeld, **dadurch gekennzeichnet,**
- **dass** in dem Isolierkörper (8) Mittel (13) zur Befestigung mit der Schaltfeldwand (1) integriert sind,
- **dass** innerhalb der Topfform des Isolierkörpers (8) eine Dichtspalte (32) zur Aufnahme eines schaltfeldseitigen Randes (18.2) eines becherförmigen Dichtkörpers (18) aus Isoliermaterial vorhanden ist,
- **dass** der Rand (18.2) des Dichtkörpers (18) in die Dichtspalte (32) einlegbar ist,
- **dass** der Dichtkörper (18) eine den Anschlusskontakt (48) berührende innere Leitbeschichtung (28) trägt, und diese sich schaltfeldseitig bis zum Rand (18.2) erstreckt,
- **dass** der Anschlusskontakt (48) zur Aufnahme eines Leiters (52) zur elektrischen Verbindung zum Messfeld ausgebildet ist,
- **dass** der Dichtkörper (18) das Kontaktstück (12), den Anschlusskontakt (48) und den Leiter (52) umhüllt,
- **dass** ein Befestigungsflansch (66) den Dichtkörper (18) zentrisch umgreift und der Dichtkörper (18) über den Befestigungsflansch (66) an der Messfeldwand (2) fixierbar ist, dass der Dichtkörper eine Befestigungsschulter (58) aufweist,
- **dass** von der Befestigungsschulter (58) aus betrachtet, sich messfeldseitig ein erster zylindrischer Abschnitt des Dichtkörpers mit einer Länge (L1) anschließt und
- **dass** auf dem Dichtkörper (18) eine äußere Leitbeschichtung (28) vorhanden ist, die sich von der Berührungsfläche mit der Messfeldwand (2) auf zwei Drittel der Länge (L1, L2) in das Messfeld hinein erstreckt.

2. Sammelschienenverbindung nach Anspruch 1, **dadurch gekennzeichnet, dass** der Dichtkörper (**18**) meßfeldseitig geometrisch derart geformt ist, dass die Form zusammen mit der äußeren Leitbeschichtung (**26**) ein Feldsteuerprofil (**60**), vergleichbar einem Borda-Profil, bildet.

3. Sammelschienenverbindung nach Anspruch 2, **dadurch gekennzeichnet, dass** das Feldsteuerprofil (**60**) derart ausgebildet ist, dass die meßfeldseitige Länge des Dichtkörpers (**18**) drei Längenabschnitte (**L1**, **L2**, **L3**) etwa gleicher Länge hat,
- dass der erste Längenabschnitt (**L1**) mit einem eine ausreichende Material-Steifigkeit erzeugenden Durchmesser (**D2**) verläuft,
- dass auf dem zweiten Längenabschnitt (**L2**) eine konische Verjüngung vorhanden ist, die nach einem Radius (**R**) in eine trompetenförmige Öffnung übergeht und sich tangential öffnet und
- dass sich als dritter Längenabschnitt (**L3**) ein kurzer zylindrischer Teilabschnitt (**L3'**) mit demselben Durchmesser (**D2**) wie im ersten Längenabschnitt (**L1**) und ein Konus anschließt und der Konus (**64**) sich auf den Durchmesser des Leiters (**52**) verjüngt, wobei die äußere Leitbeschichtung (**26**) von der Befestigungsschufter (**58**) bis hin zum kleinsten Durchmesser der konischen Verjüngung im zweiten Längenabschnitt (**L2**) vorhanden ist.

4. Sammelschienenverbindung nach einem der vorhergehenden Ansprüche, **dadurch gekennzeichnet, dass** der Anschlußkontakt (**48**) für die Aufnahme des Dichtkörpers (**18**) halbkugelig (**46**) und der Dichtkörper (**18**) komplementär mit einem kugelförmigen Hohlraum (**46'**) ausgebildet ist.

5. Sammeischlenenverbindung nach einem der vorhergehenden Ansprüche, **dadurch gekennzeichnet, dass** der Anschlußkontakt (**48**) eine Bohrung (**50**) zur Aufnahme des Leiters (**52**) hat und der Anschlußkontakt (**48**) über mindestens eine Kontaktschraube (**54**) mit dem Leiter (**52**) verbindbar ist.

6. Sammelschienenverbindung nach einem der vorhergehenden Ansprüche, **dadurch gekennzeichnet, dass** der Leiter als Rundleiter (**52**) ausgebildet und von einem Schrumpfschlauch (**68**) umhüllt ist, und im Anschlußkontakt (**48**) zur Aufnahme des Schrumpfschlauchs (**68**) eine Ausnehmung (**70**) ausgebildet ist.

7. Sammelschienenverbindung nach einem der vorhergehenden Ansprüche, **dadurch gekennzeichnet, dass** die Leitbeschichtungen (**26**, **28**) aus Leitlack bestehen.

## Claims

1. A busbar connection from a switchgear to an air-insulated metering panel, in particular in a gas-insulated medium-voltage switchgear,
comprising an opening for each phase in a wall (1) of the switchgear for a connection to the metering panel, where a metering panel wall (2) and a switchgear panel wall (1) are adjacent to one another and connected to one another,
comprising a pot-shaped insulating body (8), which is directed with its open side towards the inner face of the switchgear panel wall (1),
comprising an electrical contact element (12) located inside the pot shape of the insulating body (8), and having the ability to receive, in the contact piece (12), a connecting contact (48) for the electrical connection to the metering panel, **characterised in**
- **that** means (13) for fixing to the switchgear panel wall (1) are provided in the insulating body (8),
- **that** a sealing gap (32) is provided for receiving a switchgear-panel-side edge (18.2) of a pot-shaped sealing body (18) made of insulating material,
- **that** the edge (18.2) of the sealing body (18) can be inserted in the sealing gap (32),
- **that** the sealing body (18) has an inner conductive coating (28) which touches the connecting contact (48) and which extends as far as the edge (18.2) on the side of the switchgear panel,
- **that** the connecting contact (48) is configured for receiving a conductor (52) for the electrical connection to the metering panel,
- **that** the sealing body (18) surrounds the contact piece (12), the connecting contact (48) and the conductor (52),
- **that** a fastening flange (66) centrally encompasses the sealing body (18) and the sealing body (18) can be fixed to the metering panel wall (2) via the fastening flange (66), that the sealing body has a fastening shoulder (58),
- **that** when viewed outwards from the fastening shoulder (58), a first cylindrical section of the sealing body having a length (L1) follows on the metering panel side and
- **that** an outer conductive coating (28) is provided on the sealing body (18) which extends from the contact surface with the metering panel wall (2) over two thirds of the length (L1, L2) into the metering panel.

2. The busbar connection according to claim 1, **characterised in that** the sealing body (18) is formed geometrically on the metering panel side in such a manner that the form together with the outer conductive coating (26) forms a panel control profile (60) comparable to a Borda profile.

3. The busbar connection according to claim 2, **characterised in that** the panel control profile (60) is configured in such a manner that the length of the sealing body (18) on the metering panel side comprises three length sections (L1, L2, L3) of approximately equal length,
- that the first length section (L1) runs with a diameter (D2) generating sufficient material stiffness,
- that a conical tapering is provided on the second length section (L2) which goes over into a trumpet-shaped opening with a radius (R), and
- that a short cylindrical partial section (L3') having the same diameter (D2) as in the first longitudinal section (L1) and a cone follows as the third length section (L3) and the cone (64) tapers to the diameter of the conductor (52),
wherein the outer conductive coating (26) is provided from the fastening shoulder (58) as far as the smallest diameter of the conical tapering in the second length section (L2).

4. The busbar connection according to any one of the preceding claims, **characterised in that** the connecting contact (48) for receiving the sealing body (18) is configured as hemispherical (46) and the sealing body (18) is configured complementarily having a hemispherical cavity (46').

5. The busbar connection according to any one of the preceding claims, **characterised in that** the connecting contact (48) has a hole (50) for receiving the conductor (52) and the connecting contact (48) can be connected via at least one contact screw (54) to the conductor (52).

6. The busbar connection according to any one of the preceding claims, **characterised in that** the conductor is configured as a round conductor (52) and is encompassed by a shrink sleeve 968) and a recess (70) for receiving the shrink sleeve (68) is configured in the connecting contact (48).

7. The busbar connection according to any one of the preceding claims, **characterised in that** the conductive coatings (26, 28) consist of conductive varnish.

## Revendications

1. Liaison de barre collectrice d'une installation de distribution avec un panneau de mesure isolé par air, en particulier sur une installation de distribution à tension moyenne isolée par gaz,
comprenant une ouverture pour chaque phase dans une paroi (1) de l'installation de distribution pour une liaison avec le panneau de mesure, où une paroi du panneau de mesure (2) et une paroi du panneau de distribution (1) sont l'une à côté de l'autre et sont reliées l'une à l'autre,
un corps isolant (8) en forme de pot, qui est dirigé avec son côté ouvert vers la surface intérieure de la paroi du panneau de distribution (1),
une pièce de contact (12) électrique, se trouvant à l'intérieur de la forme de pot du corps isolant (8), et une possibilité de logement dans la pièce de contact (12) pour un contact de branchement (48) pour la liaison électrique avec le panneau de mesure, **caractérisée en ce que**
- des moyens (13) pour la fixation avec la paroi du panneau de distribution (1) sont intégrés dans le corps isolant (8),
- **en ce qu'**une fente d'étanchéité (32) est présente à l'intérieur de la forme de pot du corps isolant (8) pour le logement d'un bord (18.2) côté panneau de distribution d'un corps d'étanchéité (18) en forme de gobelet à base de matériau isolant,
- **en ce que** le bord (18.2) du corps d'étanchéité (18) peut être introduit dans la fente d'étanchéité (32),
- **en ce que** le corps d'étanchéité (18) porte un revêtement conducteur (28) intérieur touchant le contact de branchement (48) et **en ce que** ce revêtement s'étend côté panneau de distribution jusqu'au bord (18.2),
- **en ce que** le contact de branchement (48) est conçu pour le logement d'un conducteur (52) pour la liaison électrique avec le panneau de mesure,
- **en ce que** le corps d'étanchéité (18) enrobe la pièce de contact (12), le contact de branchement (48) et le conducteur (52),
- **en ce qu'**une bride de fixation (66) enveloppe le corps d'étanchéité (18) de façon centrale et le corps d'étanchéité (18) peut être fixé par la bride de fixation (66) sur la paroi du panneau de mesure (2), de telle sorte que le corps d'étanchéité présente un épaulement de fixation (58),
- **en ce que**, vu depuis l'épaulement de fixation (58), une première partie cylindrique du corps d'étanchéité avec une longueur (L1) vient se raccorder côté panneau de mesure, et
- **en ce que** sur le corps d'étanchéité (18) est présent un revêtement conducteur (28) extérieur, qui s'étend depuis la surface de contact avec la paroi du panneau de mesure (2) sur deux tiers de la longueur (L1, L2) à l'intérieur du panneau de mesure.

2. Liaison de barre collectrice selon la revendication 1, **caractérisée en ce que** le corps d'étanchéité (18) est formé géométriquement côté champ de mesure de telle sorte que la forme constitue conjointement avec le revêtement conducteur (26) extérieur un profil de commande de champ (60), comparable à un profil Borda.

3. Liaison de barre collectrice selon la revendication 2, **caractérisée en ce que** le profil de commande de champ (60) est conçu de telle sorte que la longueur, côté champ de mesure, du corps d'étanchéité (18) a trois tronçons de longueur (L1, L2, L3) de longueur à peu près identique ;
- **en ce que** le premier tronçon de longueur (L1) est agencé avec un diamètre (D2) générant une rigidité de matériau suffisante,
- **en ce qu'**un rétrécissement conique, qui fait place après un rayon (R) en une ouverture en forme de trompette et s'ouvre de façon tangentielle, est présent sur le second tronçon de longueur (L2) et
- **en ce qu'**un tronçon partiel (L3') cylindrique court présentant le même diamètre (D2) que dans le premier tronçon de longueur (L1) en tant que troisième tronçon de longueur (L3) et un cône de fond viennent se raccorder et le cône (64) se rétrécit jusqu'au diamètre du conducteur (52), le revêtement conducteur (26) extérieur allant de l'épaulement de fixation (58) jusqu'au plus petit diamètre du rétrécissement conique étant présent dans le second tronçon de longueur (L2).

4. Liaison de barre collectrice selon l'une quelconque des revendications précédentes, **caractérisée en ce que** le contact de raccordement (48) pour le logement du corps d'étanchéité (18) a une forme de demi-cône (46) et le corps d'étanchéité (18) est conçu de façon complémentaire avec une cavité (46') de forme sphérique.

5. Liaison de barre collectrice selon l'une quelconque des revendications précédentes, **caractérisée en ce que** le contact de raccordement (48) a un alésage (50) pour le logement du conducteur (52) et le contact de raccordement (48) peut être relié au moyen d'au moins une vis de contact (54) au conducteur (52).

6. Liaison de barre collectrice selon l'une quelconque des revendications précédentes, **caractérisée en ce que** le conducteur est conçu comme conducteur rond (52) et est enveloppé d'une gaine thermorétractable (68), et un évidement (70) est conçu dans le contact de raccordement (48) pour le logement de la gaine thermorétractable (68).

7. Liaison de barre conductrice selon l'une quelconque des revendications précédentes, caracétérisée en ce que les revêtements conducteurs (26, 28) sont à base de laque conductrice.
